# EUROPEAN PATENT APPLICATION

(11) **EP 1 804 176 A1**
(43) Date of publication of application: **04.07.2007**
(21) Application number: 05077997.4
(22) Date of filing: 27.12.2005
(51) Int. Cl.: G06F 17/30, H04L 29/06

(54) **Method and system for downloading streaming content**

(71) Applicant: Koninklijke KPN N.V., 2516 CK The Hague (NL)
(72) Inventor: Bresser, Ad, 2509 CH The Hague (NL)
(74) Representative: Wuyts, Koenraad Maria

(57) **Abstract**

According to this invention a content object can be downloaded that is being sent to an access device (1) from a content platform (5) comprising a streaming server (4), a content server (8) and a storage means (9) for storing one or more content objects. According to this method a content object is identified by means of a content object identifier and the content object identifier is presented via the access device (1) during a time interval that said content object is being sent as streaming content. When the content object identifier is selected via the access device (1), the content object is retrieved by the content server (8) from the storage means (9) and downloaded to the access device (1).

## Description

### FIELD OF THE INVENTION

This invention relates to a method and a system for downloading video and audio content in a content streaming environment.

### BACKGROUND OF THE INVENTION

The retrieval of video and audio content in an IP based environment has become increasingly popular. Video and audio content is accessible nowadays in many different ways. One way for making video content available to the public is according to the principle of streaming. Streaming techniques for retrieving audio data are used for example for real-time or nearly real-time radio on the Internet. Streaming audio refers to audio being played 'on the fly' as more audio data comes in. In other words, the receiving system, such as a personal computer, does not wait until the entire audio data input is received.

One of the requirements to be met by network users in order to receive streaming content is the availability of multi-media applications at the user's access equipment. These multi-media applications include audio and video software that is used to play, retrieve, and create audio and video content. Needed as well are multi-media supporting equipment such as sound-cards, audio-cards, microphones and speakers.

Inherent to the principle of data streaming is that content received by a user cannot be made available to the user a second time without starting another data streaming session. This may be an undesirable situation for the user since it in general requires extra time or costs to start up another streaming session in order to listen or view the content again.

A known way to record streaming content is the streaming music recorder of Replay Music. According to this known method (http://www.replay-video.com/replay-music/index.php?src=GRM RECORDRADIO) it is possible to record music from online radio stations or digital music services, so that a user can listen to the recorded music via for instance an iPod, MP3 Player or CD player. Replay Music captures MP3 files from a streaming source, and saves it on a PC as an MP3 file.

### PROBLEM DEFINITION

A disadvantage of the prior art is that it is not possible for a user to selectively download content in a simple way at the time that this content is received as streaming data. In other words, when a user receives streaming audio or video and the user wants to download that particular content, the user is according to the prior art not able to download this content. The known method for recording streaming content requires the user to actively start and stop the recording. A consequence of this is that, in order to record the complete content (e.g. the complete song), the user needs to start (and stop) recording at the right time. If this is not done by the user, just a part of the content will be recorded, or other content that is not interesting for the user is recorded as well.

### AIM OF THE INVENTION

It is an object of the invention to diminate the drawbacks of the prior art and to provide a system and a method for downloading content that is being received by a user as streaming content.

### SUMMARY OF THE INVENTION

According to the present invention it is possible to identify a contentobject such as a video clip during a time interval that the content object is received by an access device as streaming content. When streaming content is sent from a streaming server to the access device, the content object identifier of the content object that is broadcasted on a certain instance of time is known in the content platform that comprises the streaming server. The content platform can for instance be a television studio or a part thereof, an ISP platform or a recording studio for recording music. Identifying a content object may for instance be accomplished by attaching a content object identifier to each content object in the storage means from which the streaming server receives its content. When a content object is retrieved from the storage means by the streaming server, also the attached content object identifier may be retrieved. This content object identifier can be shown on the screen of the access device when the corresponding content object is received by the access device as streaming content. There are several possible locations where the content object identifier can be displayed such as in the window that is shown to the user when the streaming content is received, or on the web page via which the user at an earlier stage opened the window. This content object identifier can for instance be shown to the user of the access device as a hyperlink on the screen of the access device. This informs the user about the identity (e.g. name of the artist or the song) of the song or video that is received as streaming content. This is an advantage since the user is in general not aware of details of the song that is received as streaming audio at a certain moment of time.

Each time another content object is broadcasted during the live radio program the corresponding content object identifier may be refreshed so that the actual content object identifier that is presented to the user of the access device each time corresponds to the content object that is received by the access device as streaming content.

According to the present invention the content object identifier can be activated or selected (for instance by clicking a hyperlink) so that a download process is started. The request to download from the user can be received by a content server, whereby the content object identifier informs the content server which content object to retrieve from the storage means.

It is an advantage for the user to have the ability to download content that is received as streaming content. For instance, the user can decide to download the particular content while the streaming content is being received by the access device. If the bandwidth of the communication path via which the downloading takes place is high compared to the bandwidth via which the streaming content is received, it might be possible to have the downloaded content on the access device before the streaming content would have been arrived at the access device.

It may be possible that the functionality for determining the content object identifier, for presenting the object identifier via the access device, and for receiving the selection from the access device is implemented in another functional entity then the streaming server or the content server. In such a case, there is a control ertity, such as a software program residing at a computer system, that controls the activities of the streaming server, the content server and the storage means. This control entity could also take care of accounting and access issues regarding the content to be downloaded to the access device. The control entity may also coordinate with regard to the situation that there are different sessions between the access device and the content platform, for instance a session via which the streaming content is being received and a session via which downloaded content is being received.

It may also be possible in an embodiment according to the present invention to associate information related to the content object that is sent to the access device (1) as streaming content. For instance, upon selecting the content object identifier background information of the corresponding content object will be sent to the access device (1).

### BRIEF DESCRIPTION OF THE DRAWING FIGURE

The foregoing aspects and many of the attendant advantages of this invention will be explained by reference to the following detailed description, when taken in conjunction with the accompanying drawing, wherein:
FIG. 1 is a block diagram illustrating an architecture of an embodiment of the invention.
FIG. 2 a block diagram illustrating an architecture of another embodiment of the invention.

### EXEMPLARY EMBODIMENTS

For the purpose of teaching of the invention, preferred embodiments of the method and devices of the invention are described in the sequel. It will be apparent to the person skilled in the art that other alternative and equivalent embodiments of the invention can be conceived and reduced to practice without departing form the true spirit of the invention, the scope of the invention being limited only by the appended claims as finally granted.

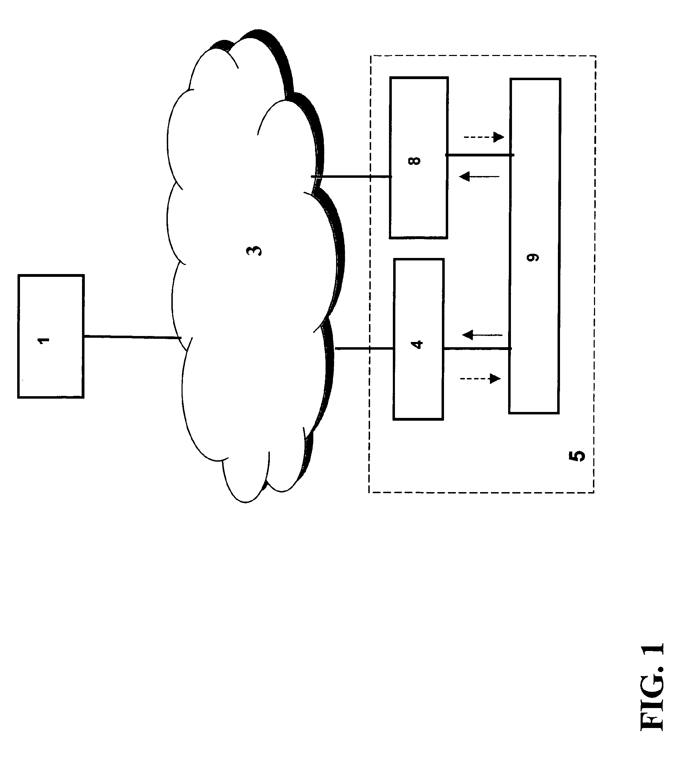

In FIG. 1 an architecture according the invention is depicted, in which a user may receive from a streaming server (4) streaming content such as audio or video on an access device (1) via a network (3). The streaming server (4) can be any means for sending streaming content. The network (3) can be a fixed or mobile network. The network (3) may be a public network, such as the Internet, or a private network. The network may be a non-secure network or a network that is perceived as being non-secure, although secure networks are not excluded in relation to this invention. The network (3) can be facilitated by a service provider, such as an Internet service provider, although network (3) also can be facilitated by an organization operating accessibility to remote sites for specific groups of customers. In the latter case the customer is able to access directly, i.e. without using the Internet, one or more remote locations. The streaming server (4) may be comprised by a content platform (5). As an alternative for being accessible via the Internet, the streaming server (4) can be part of a private domain accessible for a closed user group.

The access device (1) is a device for accessing a mobile or fixed network, such as a telephone, a laptop or a personal computer. The originating access device (1) may also be part of a local area network. Peripheral devices like a modem and a mouse are not shown. In general, the access device comprises appropriate software for receiving streaming audio or video. The details of the type of connection between the access device (1) and the network (3) are of no consequence in the present invention. In order to receive streaming video or audio content, it is required that the appropriate software is comprised by the access device (1). This software is often called a player, which is a special program that receives, uncompresses and sends video data to the display and audio data to speakers that are comprised of the access device (1). A player can be either an integral part of a browser or can be downloaded from a website. Streaming is a technique for viewing video content or listening to audio content via a network without completely downloading the video or audio content. Without streaming techniques, the content needs first to be downloaded to a user device, after which the content can be viewed or listened to. Streaming enables content to be sent in a continuous data stream to the access device (1), whereby the content is meanwhile being presented to the user of the access device (1).

Content is stored in a storage means (9) that is accessible to or comprised by a streaming server. When a user indicates that he wants to receive streaming content, the streaming server (4) retrieves the content from the storage means (9) and processes the content into streaming content. The streaming server (4) starts then a data stream to the access device (1). A relatively small portion of the data stream may be stored in a buffer comprised by the access device (1). A purpose of this buffer, which is not always present in the access device (1), is to overcome minor delays that occur on the transmission path between the streaming server (4) and the access device (1). A purpose of this is to present the streaming content to the user of the access device (1) with relatively little loss of quality due to failures in the transmission path.

When the amount of received streaming data in the buffer is sufficient, the player residing at the access device (1) starts presenting the audio or video content to the user. The audio or video content is presented nearly real-time. Some delay may occur due to for instance the size of the buffer and the efficiency of the process of decoding the incoming streaming data.

There are in general many different streaming audio and video formats, such as the standards of the Moving Pictures Experts Group (MPEG). For video streaming MPEG-1, MPEG-2 and MPEG-4 is for instance used. For audio streaming MP3 (also an MPEG standard) is for instance used. In addition, there are also proprietary formats such as RealMedia, Apple Quicktime en Windows Media. Often, it is required to have a special player for every streaming format. For instance, it is required to use Windows Media Player for Windows Media files.

There are also several communication protocols for the transport of streaming data. For the transport of streaming data over an IP network, there is for examples RTP (Real Time Transport Protocol) and RTCP (Real Time Control Protocol). The protocol stack of these streaming transport protocols is often comprised by the player software comprised of the access device (1).

An advantage of streaming content is that there is almost no space required on the hard-disk (if there is any) of the access device (1). Another advantage is that content can be presented to the user soon after the user has requested to receive the content.

Again with reference to Fig. 1 the dashed line relates to the content platform (5). The content platform (5) can be operated and exploited by a content provider. It is also possible that a service provider such as an ISP (Internet Service Provider) is operating the content platform (5). The content platform (5) comprises a content server (8) such as a WWW-server or a FTP (File Transfer Protocol) server. The content server can be any means (such as a server or application) for sending content to an access device (1). The streaming server (4) and the content server (8) have access to the storage means (9) that can also be comprised by the content platform (5). However, it is also possible that the storage means (9) is not comprised by the content platform (5). In the latter, there will be a communication path between the content platform (5) and the storage means (9). It is also possible that streaming server (4) and the content server (8) are residing at the same host or machine. The content server (8) is able to retrieve video and or audio content from the storage means (9), after which the content server (8) is able to send the content to the access device (1). In the case that the content server (8) is a WWW-server, often HTTP (HyperText Transfer Protocol) or FTP (File Transfer Protocol) is used as a communication protocol between the content server (8) and the access device (1). We often speak of downloading content when a user initiates the transfer of content from the content server (8). The content is then presented on the screen of the access device (1) after which the content can be stored in a storage means of the access device (1). It is also possible that content is downloaded to the storage means without being presented to the user. This is for instance the case that FTP is used.

If the user selects to receive particular video content as streaming video content, then this is acknowledged to the streaming server (4). Thereupon the streaming server (4) will retrieve the appropriate content from the storage means (9). This content is processed by the streaming server (4) and sent as streaming video content to the access device. However, it is also possible that the streaming content is received from for instance a live radio station on the Internet. When the streaming content (e.g. a live radio program) is received by the access device (1) there is in general a window displayed on the screen of the access device (1). This window offers the users a number of facilities such as starting and stopping the streaming content.

According to the present invention one or more content objects identified in the streaming content. A content object is for instance a particular song or video. In the case of a live radio program on the Internet, several songs are broadcasted. One or more of these songs can in the present invention identified as a content object, whereby a content object identifier is used to identify a particular song.

When streaming content is sent from the streaming server (4) to the access device (1), the content object identifier of the content object that is broadcasted on a certain instance of time is known in the content platform (5). This may be accomplished by attaching a content object identifier to each content object in the storage means (9). When a content object is retrieved from the storage means (9) by the streaming server (4), also the attached content object identifier may be retrieved. This content object identifier can be shown on the screen of the access device (1) when the corresponding content object is received by the access device (1) as streaming content. There are several possible locations where the content object identifier can be displayed such as in the window that is shown to the user when the streaming content is received, or on the web page via which the user at an earlier stage opened the window. This content object identifier can for instance be shown to the user of the access device (1) as a hyperlink on the screen of the access device (1). There can also for example shown a text such as 'Now playing' in addition to the hyperlink. This informs the user about the identity (e.g. name of the artist or the song) of the song or video that is received as streaming content. This can for instance be informative for the user, since the user is in general not aware of details of the song that is received as streaming audio at a certain moment of time.

Each time another content object is broadcasted during the live radio program the corresponding content object identifier may be refreshed so that the actual content object identifier each time corresponds to the content object that is received by the access device (1) as streaming content.

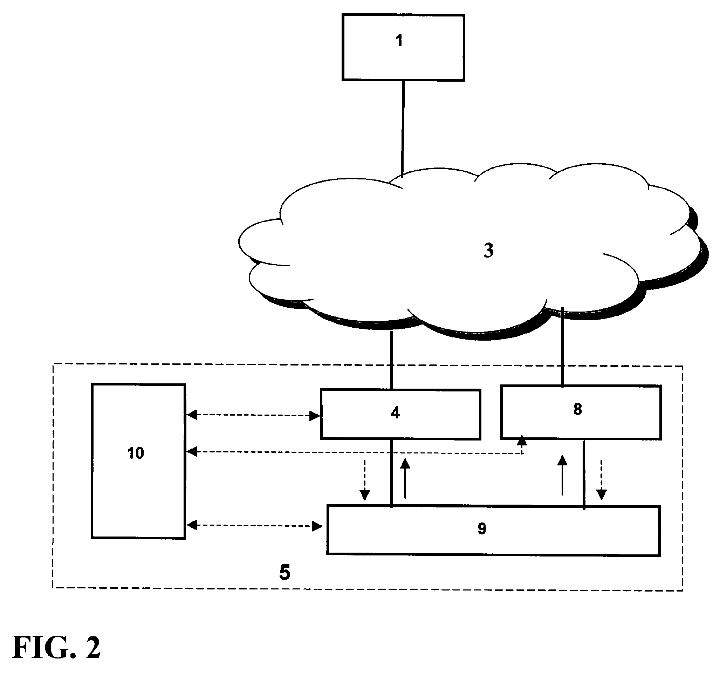

According to the present invention the content object identifier can be activated or selected (for instance by clicking the hyperlink 'Now Playing') so that a download process is started. The request to download from the user can be received by the content server (8), whereby the content object identifier informs the content server (8) which content object to retrieve from the storage means (9). It may be possible that the functionality for determining the content object identifier, for presenting the object identifier via the access device (1), and for receiving the selection from the access device (1) is implemented in another functional entity then the streaming server (4) or the content server (5). In such a case, there is a server or application comprised by the content platform (5) that is able to perform this type of functions. FIG.2 contains an architecture is depicted whereby there is a separate control entity (10), such as a software program residing at a computer system, that controls the activities of the streaming server (4), the content server (8) and the storage means (9). It is also possible that the control entity (10) is not comprised by the content platform (5) but is connected via a communications network (for instance communication network (3)) to the content platform (5).

It may also be possible in an embodiment according to the present invention to associate information related to the content object that is sent to the access device (1) as streaming content. For instance, upon selecting the content object identifier background information of the corresponding content object will be sent to the access device (1). In the case of a song, this background information could be information related to the performer of the song.

## Claims

1. Method for downloading a content object that is being sent to an access device (1) from a content platform (5) comprising a streaming server (4), a content server (8) and a storage means (9) for storing one or more content objects, the method comprising the steps of:
- identifying a content object that is being sent from the streaming server (4) as streaming content by means of a content object identifier;
- presenting said content object identifier via the access device (1) during a time interval that said content object is being sent as streaming content;
- retrieving said content object by the content server (8) from the storage means (9) when said content object identifier is selected via the access device (1); and
- downloading said content object to the access device (1).

2. Method according to claim 1, whereby said content object is a song.

3. Method according to claim 1, whereby said content object is a video clip.

4. Method according to claims 1, 2 or 3, whereby the storage means (9) is a database.

5. Method according to any of the preceding claims, whereby said content object identifier is presented as a hyperlink.

6. Method according to any of the preceding claims, whereby the downloading of said content takes place via a file transfer protocol.

7. Method according to any of the preceding claims, whereby the access device (1) is a mobile communication device.

8. Method according to claims 1 to 6, whereby the access device (1) is a personal computer.

9. A content platform (5) for downloading, to an access device (1), a content object that is being sent as streaming content to the access device (1) when an object identifier identifying said content object is selected via the access device (1).

10. A content platform (5) according to claim 9, the content platform (5) comprising a streaming server (4) for sending streaming content to the access device (1) and a content server (8) for downloading content to the access device (1).
